# EUROPÄISCHE PATENTSCHRIFT

(11) **EP 2 616 326 B1**
(45) Veröffentlichungstag und Bekanntmachung des Hinweises auf die Patenterteilung: **06.05.2015**
(21) Anmeldenummer: 11757312.1
(22) Anmeldetag: 14.09.2011
(51) Int. Cl.: B63H 9/02

(54) **MAGNUSROTOR MIT AUSWUCHTGEWICHTEN UND VERFAHREN ZUM AUSWUCHTEN EINES ROTATIONSKÖRPERS**
MAGNUS ROTOR WITH BALANCING WEIGHTS AND METHOD FOR BALANCING A BODY OF REVOLUTION
ROTOR À EFFET MAGNUS COMPORTANT DES MASSES D'ÉQUILIBRAGE ET PROCÉDÉ POUR ÉQUILIBRER UN CORPS DE ROTATION

(30) Priorität: 16.09.2010 DE 102010040915
(43) Veröffentlichungstag der Anmeldung: 24.07.2013
(73) Patentinhaber: Wobben Properties GmbH, 26605 Aurich (DE)
(72) Erfinder: ROHDEN, Rolf, 26607 Aurich (DE); BOHLEN, Thomas, 26624 Südbrookmerland (DE)
(74) Vertreter: Eisenführ Speiser
(86) Internationale Anmeldenummer: PCT/EP2011/065957
(87) Internationale Veröffentlichungsnummer: WO 2012/035073

(56) Entgegenhaltungen:
- DE-A1-102006 025 732
- US-A- 2 713 392
- US-A- 4 582 013

## Beschreibung

Die vorliegende Erfindung betrifft einen Magnusrotor mit einem Rotationskörper zum Wandeln der Windkraft in eine Vorschubkraft unter Ausnutzung des Magnuseffektes sowie ein Verfahren zum Auswuchten eines solchen Rotationskörpers.

Ein Magnusrotor, auch Flettner- oder Segelrotor genannt oder ein ähnlicher rotationssymmetrischer Rotationskörper rotiert um eine Drehachse und wandelt dadurch unter Ausnutzung des Magnuseffektes eine Luftströmung, insbesondere Wind, in eine Kraft etwa quer zur Luftströmung um, die als Vorschubkraft verwendet werden kann.

Bei einer Drehbewegung des Magnusrotors, insbesondere bei großen Magnusrotoren, können Unwuchten durch eine unsymmetrische Massenverteilung entstehen. Aufgrund der Unwuchten treten Schwingungen auf, die die Laufruhe des Magnusrotors stören und zu einem erhöhten Verschleiß der Lagerungen oder sogar zu einer Zerstörung führen können.

Bei einem starren Rotationskörper, insbesondere mit starrer Rotationsachse, also bei einem Rotationskörper, bei dem im Bereich der Betriebsdrehzahl lediglich vernachlässigbar kleine Deformationen auftreten, so dass sich der Rotationskörper annähernd wie ein idealer starrer Körper verhält, ist ein Auswuchten in zwei Ebenen oder sogar nur in einer Ebene - einfaches Auswuchten - ausreichend. Eine Ebene befindet sich dabei senkrecht zur Drehachse des Rotationskörpers an einer vorbestimmten Position in axialer Richtung der Drehachse und ist begrenzt durch den Umfang des Rotationskörpers.

Ist ein Segelrotor aber in axialer Richtung so groß, dass nicht idealisierend von einem starren Körper ausgegangen werden kann, ist eine einfaches Auswuchten nicht mehr ausreichend um eine stabile Drehbewegung ohne Unwucht zu erreichen.

Als allgemeiner Stand der Technik sei auf die Dokumente DE 10 2006 025 732 A1 und DE 29 818 774 U1 verwiesen.

Aufgabe der vorliegenden Erfindung ist es somit, wenigstens eines der oben beschriebenen Probleme zu beheben, zumindest zu verringern. Insbesondere soll ein Auswuchten von Drehunwuchten bei einem Magnusrotor ermöglicht werden.

Zur Lösung der Aufgabe wird erfindungsgemäß ein Magnusrotor nach Anspruch 1 sowie ein Verfahren nach Anspruch 9 vorgeschlagen. Vorteilhafte Weiterbildungen sind auch in den Unteransprüchen beschrieben.

Der erfindungsgemäße Magnusrotor dient zum Wandeln der Windkraft in eine Vorschubkraft unter Ausnutzung des Magnuseffektes. Er weist einen zum Rotieren vorbereiteten und zu einer Drehachse rotationssymmetrischen Rotationskörper sowie einen Träger, auf dem der Rotationskörper gelagert ist, auf und ist in Form eines Zylinders ausgebildet. Eine solche Form erreicht eine gleichmäßige Windanströmung und ist fertigungstechnisch günstig. Zudem weist der Rotationskörper Mittel auf, die diesen Versteifen - nachstehend Versteifungsmittel genannt-.

Der Rotationskörper ist dazu vorbereitet in wenigstens zwei in axialer Richtung voneinander beabstandeten Ebenen senkrecht zur Drehachse Auswuchtgewichte an einer vorbestimmten Stelle aufzunehmen. Die vorbestimmten Stellen befinden sich dabei in einer solchen Ebene an unterschiedlichen Positionen in Umfangsrichtung des Rotationskörpers. D.h. bei einem Kreisumfang von 360°, kann beispielsweise jede Stelle in 10° Schritten von 0° bis 360° in einer Ebene zur Aufnahme von Auswuchtgewichten vorbereitet sein. D.h., dass ein Auswuchten in drei Dimensionen stattfindet.

Das Anbringen der Gewichte an einer solchen vorbestimmten Stelle dient zum Auswuchten des Rotationskörpers. Dabei sind wenigstens zwei Ebenen in axialer Richtung der Drehachse bei einem Rotationskörper, bei dem nicht mehr von einem starren Körper ausgegangen werden kann, wie beispielsweise einem Magnusrotor, notwendig, um unwuchtbedingten Deformationen entgegenzuwirken.

Alternativ weist der Rotationskörper Gewichtskörper auf, denen beispielsweise über Bohrungen Masse entnommen werden kann.

Vorzugsweise ist auch eine Endscheibe, die sich am oberen Ende eines senkrecht stehenden Magnusrotors befindet, zum Auswuchten vorbereitet. An der Endscheibe treten aufgrund eines großen Hebelarms - bei beispielsweise einer Höhe von über 25 Metern des Magnusrotors - große Biegemomente auf, die die Laufruhe des Magnusrotors stören.

Eine bevorzugte Ausführungsform des Magnusrotors besteht darin, dass an wenigstens zwei Versteifungsmitteln Auswuchtgewichte angebracht sind. Um ein präzises Auswuchten an den Stellen der auftretenden Eigenformen durchzuführen, wird vorgeschlagen, die Versteifungsmittel beispielsweise in einem gleichmäßigen Abstand von einem Meter zueinander in axialer Richtung der Drehachse vorzusehen. Bevorzugte Abstände sind 0,5 bis 2 Meter, insbesondere 0,8 bis 1,5 Meter. Alternativ können die Abstände der Versteifungsmittel auch ungleichmäßig in axialer Richtung der Drehachse verlaufen. Bevorzugte Abstände sind 0,8 Meter an einem Ende des Rotationskörpers in axialer Richtung zunehmend bis hin zu Abständen von 1,5 Meter am anderen Ende des Rotationskörpers.

In einer weiteren bevorzugten Ausführungsform sind der Rotationskörper und/oder der Träger des Magnusrotors von innen begehbar. Der Innenraum des Magnusrotors ist somit für beispielsweise die Ermittlung der Unwuchten und/oder für das darauf folgende Auswuchten leicht zugänglich. Die Zugänge zu den jeweiligen Positionen, an denen Auswuchtgewichte angebracht bzw. entfernt werden sollen, können z.B. über Leitern und Plattformen erreicht werden.

Vorzugsweise ist ein Träger vorgesehen, der sich zumindest teilweise im Inneren des Rotationskörpers befindet und Öffnungen aufweist, durch die Service-Personal einen Zugriff aus dem Träger heraus auf wenigstens eines der Versteifungsmittel erhält. Die Öffnungen könnten beispielsweise auch in regelmäßigem Abstand in axialer Richtung der Drehachse angebracht sein, wobei die Anzahl der Öffnungen nach Bedarf angepasst werden kann.

In einer bevorzugten Ausführungsform werden die Öffnungen über Abdeckungen verschlossen. Die Abdeckungen können beispielsweise über eine Schraubenverbindung angebracht und somit bei Bedarf auch entfernt werden. Dies hat den Vorteil, dass bei Betrieb des Magnusrotors kein Sicherheitsrisiko für beispielsweise Servicepersonal durch die Öffnungen entsteht, aber dennoch ein Zugriff aus dem Träger heraus auf die Versteifungsmittel bei Bedarf zum Anbringen von Auswuchtgewichten möglich ist.

Vorzugsweise befinden sich die Versteifungsmittel auf der Innenseite des Rotationskörpers und verlaufen jeweils in Umfangsrichtung. Diese sind insbesondere als Spanten und/oder umlaufende Stege ausgebildet.

Vorteilhaft ist unter anderem, wenn die Versteifungsmittel Ausnehmungen, Löcher und/oder Vorsprünge um den gesamten Umfang in regelmäßigem Abstand aufweisen. Somit können beispielsweise die Auswuchtgewichte an verschiedenen vorbestimmten Positionen in einer Ebene des Rotationskörpers auf den Versteifungsmitteln jeweils im Bereich einer solchen Ausnehmung oder eines solchen Vorsprungs angebracht werden. Vorzugsweise sein die Ausnehmungen, Löcher und/oder Vorsprünge in einem Abstand von 10cm angebracht.

In einer weiteren bevorzugten Ausführungsform ist ein Antriebsmotor im Innern des Trägers angeordnet. Vorteilhaft hierbei ist, dass der Antriebsmotor vor Witterungseinflüssen wie beispielsweise Wind und Regen geschützt ist und somit nicht nur das Material geschont wird, sondern auch Wartungsarbeiten unabhängig von der Witterung sind.

Ausgehend von einem solchen Magnusrotor wird erfindungsgemäß ein Verfahren zum Auswuchten vorgeschlagen. Dabei wird der Rotationkörper zunächst über den Antriebsmotor zum Erfassen der Unwuchten angetrieben. Vorteilhaft hierbei ist, dass der Antriebsmotor, der den Rotationskörper dreht, fester Bestandteil des Magnusrotors ist und somit auch beispielsweise im Betriebszustand zum Erfassen von Unwuchten verwendet werden kann. Zudem ist keine zusätzliche separate Vorrichtung zum Drehen des Rotors notwendig. Alternativ kann das Drehen des Rotationskörpers und das Erfassen der Unwuchten auch an einem Segelrotorenstand an Land durchgeführt werden.

Dabei werden die Unwuchten des Rotationskörpers des Magnusrotors in wenigstens zwei axial versetzten Ebenen senkrecht zur Drehachse des Rotationskörpers - nachfolgend Ausgleichsebenen genannt - erfasst. Vorzugsweise werden die Unwuchten über Dehnungsmessstreifen, die beispielsweise in jeder Ebene angebracht werden, erfasst. Vorteilhaft hierbei ist, dass bereits vorhandene Dehnungsmessstreifen, die dauerhaft am Rotationskörper angebracht sind um z.B. die Vorschubkraft zu messen, verwendet werden können.

Nach Auswertung der Messergebnisse werden Auswuchtgewichte an die Versteifungsmittel, oder anderweitig, an die vorbestimmte Stellen in den jeweiligen Ebenen zur Unterdrückung der Unwucht angebracht und/oder entfernt. Hierdurch wird ein sehr präzises Auswuchten ermöglicht. Gemäß einer ermittelten Anzahl der benötigten Ausgleichsebenen sowie der Position in dieser Ebene auf dem Umfang des Rotationskörpers kann das Anbringen und/oder Entfernen der Auswuchtgewichte an den jeweiligen erforderlichen Positionen vorgenommen werden.

Vorzugsweise werden die Auswuchtgewichte auf der gegenüberliegenden Seite der Unwucht, das heißt in einem Winkel von 180° zu der erfassten Unwucht, angebracht.

Vorzugsweise werden beim Drehen auch die Unwuchten der Endscheibe erfasst und anschließend durch das Anbringen und/oder Entfernen von Auswuchtgewichten ausbalanciert.

Bevorzugt können die Auswuchtgewichte durch Öffnungen des Trägers an den Versteifungsmitteln angebracht bzw. von den Versteifungsmitteln entfernt werden. Vorzugsweise ist der Träger begehbar und lagert den Rotationskörper. Vorzugsweise befinden sich die Öffnungen an einem solchen Träger. Somit wird eine leichte Zugänglichkeit zu den Stellen, an denen die Auswuchtgewichte angebracht und/oder entfernt werden müssen, gewährleistet. Zudem ist das Anbringen bzw. Entfernen an jeder Stelle, an der eine Öffnung vorhanden ist, möglich. Zum Entfernen können die Gewichtskörper so beispielsweise durch Bohren, Schleifen oder Fräsen abgetragen werden. Alternativ können bei einer lösbaren Verbindung, wie beispielsweise einer Verbindung mit einem Gewindestift, die Gewichtskörper demontiert werden.

Vorzugsweise werden die Auswuchtgewichte jeweils mittels Gewindestift fixiert. Eine andere Vorgehensweise bei der Anbringung der Auswuchtgewichte ist beispielsweise Festklemmen und/oder Befestigen mittels Magnetkraft oder mittels Klebstoff.

Bevorzugt wird die Anzahl der in axialer Richtung voneinander beabstandeten Ebenen, die senkrecht zur Drehachse des Rotationskörpers angeordnet sind, in denen die Auswuchtgewichte angebracht bzw. entfernt werden, über die einzelnen Biegeeigenformen, die bei vorbestimmten Drehzahlen unterhalb der Betriebsdrehzahl auftreten, festgelegt. Treten mehrere Biegeeigenformen auf, so ist der Grad der Biegeeigenform der höchsten auftretenden Drehzahl unterhalb der Betriebsdrehzahl bei der Anzahl der Ebenen in denen Auswuchtgewichte angebracht und/oder entfernt werden, zu berücksichtigen. Tritt also beispielsweise bei der höchsten Drehzahl unterhalb der Betriebsdrehzahl die zehnte Biegeeigenform auf, so ist diese bei der Anzahl der Ebenen zu berücksichtigen, es sind nämlich wenigstens zehn Ausgleichsebenen vorzusehen. Treten dagegen z.B. nur drei Biegeeigenformen auf, so sind auch nur diese zu beachten.

Die höchste auftretende Drehzahl zum Bestimmen der Anzahl der Biegeeigenformen liegt beispielsweise in einem Bereich von 60%-100% der Betriebsdrehzahl. Vorzugsweise ist ein Bereich von 80%-95% der Betriebsdrehzahl zu verwenden. Der Bereich liegt z.B. bei einer Betriebsdrehzahl von 300 U/min bei 240 U/min bis 285 U/min.

In einer weiteren bevorzugten Ausführungsform werden für n Biegeeigenformen m Auswuchtgewichte in o axial voneinander beabstandeten Ebenen, die senkrecht zur Drehachse des Rotationskörpers angeordnet sind, angebracht. Hierbei sind n, m und o ganze Zahlen größer als 1. Vorteilhaft kann eine zusätzliche Auswuchtung des starren Rotationskörpers sein. Hierbei wird eine Auswuchtung in zwei weiteren solcher Ebenen vorgenommen. Somit werden für n Biegeeigenformen m+2 Auswuchtgewichte in o+2 Ebenen angebracht. Vorteilhaft hierbei ist, dass bei einer zusätzlichen Auswuchtung des starren Rotationskörpers ein ruhiges Laufen der Antriebsvorrichtung auch bei niedrigen Drehzahlen erzielt wird. So könnten beispielsweise beim Auftreten von zehn Biegeeigenformen zehn oder zwölf Auswuchtgewichte verwendet werden, beim Auftreten von z.B. drei Biegeeigenformen könnten drei oder fünf Auswuchtgewichte verwendet werden.

Vorzugsweise weist ein Magnusrotor eines oder mehrere der Merkmale auf, die oben im Zusammenhang mit der Erläuterung des Verfahrens beschrieben wurde bzw. beschrieben wurden. Ein solches Auswuchten an einem Magnusrotor führt zu einem sehr präzisen Auswuchten - Feinauswuchten - trotz der Größe und des Gewichtes des Magnusrotors, da beispielsweise die theoretisch ermittelte Anzahl der Ausgleichsebenen zur Verfügung steht und das Anbringen und/oder Entfernen von den Auswuchtgewichten an den erforderlichen Positionen leicht ausführbar ist.

Es ist günstig, den erfindungsgemäßen Magnusrotor für ein Schiff zu verwenden. Hierfür eignet sich insbesondere ein Schiff, bei dem wenigstens ein Magnusrotor mit senkrecht stehendem Rotationskörper verwendet wird, und als Haupt- oder Hilfsantrieb dienen kann.

Im Folgenden wird die Erfindung anhand der begleitenden Figuren exemplarisch erläutert.
- Figur 1: zeigt schematisch einen Schnitt eines erfindungsgemäßen Magnusrotors in einer Frontansicht.
- Figur 2: zeigt schematisch einen Magnusrotor mit Auswuchtgewichten in einer Schnittansicht
- Figur 3: zeigt einen Rotationskörper aus einer Innenansicht heraus
- Figur 4: zeigt schematisch ein Schiff mit vier Magnusrotoren
- Figur 5: zeigt schematisch die Anordnung von Dehnmessstreifen in einem Magnusrotor

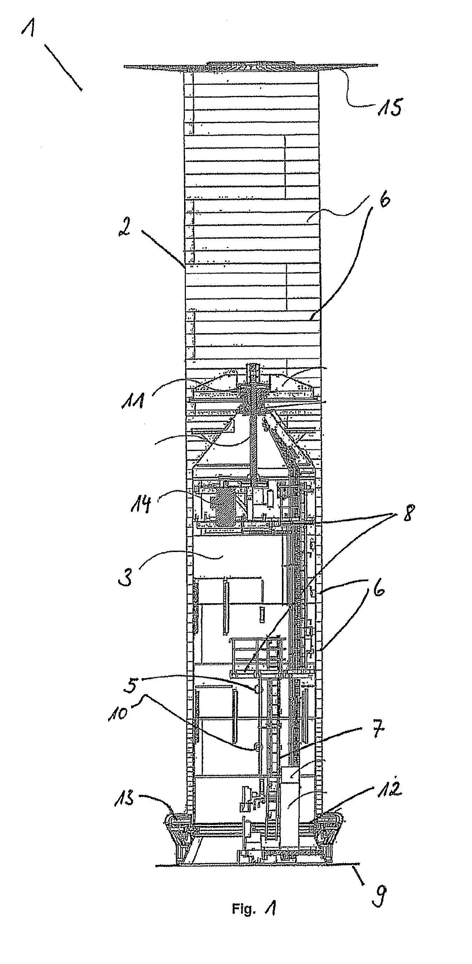

Figur 1 zeigt einen bevorzugten Magnusrotor 1, der einen Rotationskörper 2 mit einer zylindrischen Form aufweist.

Gemäß Figur 1 umfasst der Magnusrotor 1 einen zum Rotieren vorbereiteten zu einer Drehachse rotationssymmetrischen Rotationskörper 2 der über einen Träger 3 gelagert wird. Der Rotationskörper 2 ist ein zylindrischer Hohlkörper, der senkrecht auf einer Ebene 9, die Teil eines Schiffes ist - nachstehend Schiffsebene genannt -, steht. Auf der Innenseite des Rotationskörpers 2 sind Spanten 6 dargestellt, die als Versteifungsmittel zum Versteifen des Rotationskörpers 2 dienen. Sie verlaufen in Umfangsrichtung des Rotationskörpers 2. Zusätzlich werden die Spanten 6 zur Aufnahme von Auswuchtgewichten verwendet. Die Spanten 6 sind hierfür mit Ausnehmungen, Löchern und/oder Vorsprüngen in regelmäßigen Abstand in Umfangsrichtung versehen. Es können beispielsweise Gewindestifte zur Verbindung der Auswuchtgewichte mit den Spanten 6 verwendet werden. Die Spanten 6 verlaufen über den gesamten Umfang in axialer Richtung zur Drehachse in einem vorbestimmten Abstand zueinander. Der Abstand der Spanten 6 ist dabei in einem zur Ebene 9 benachbarten Abschnitt geringer, in einem distalen Abschnitt größer ausgeführt. So ist die Steifigkeit des Rotationskörpers 2 in dem zur Ebene 9 benachbarten Abschnitt höher als in dem distalen Abschnitt.

Der Träger 3 im Innern des Rotationskörpers 2 weist eine Lagerung 11 auf, welche den Magnusrotor 2 auf dem Träger 3 lagert. Die Lagerung 11 kann dabei als Rollen-, Kugel- oder Wälzlager ausgebildet sein. Gemäß Figur 1 sind in einer Ebene 12, die sich in einem vorbestimmten Abstand in axialer Richtung der Drehachse des Rotationskörpers 2 oberhalb der Schiffsebene 9 befindet, am Außenumfang Führungsrollen 13 angebracht. Die Führungsrollen 13 liegen am Rotationskörper 2 an und führen diesen in seiner Rotationsbewegung.

Der begehbare Innenraum des Trägers 3 ist in Figur 1 dargestellt. Es sind Öffnungen 5 zum Durchgreifen von dem Träger 3 zum Rotationskörper 2 zu erkennen. Diese können über Abdeckungen 10 verschlossen werden, damit die Öffnungen 5 im Betriebszustand keine Gefahr für Servicepersonal darstellen. Zusätzlich sind Leitern 7 und Plattformen 8 dargestellt, über die z.B. das Servicepersonal in unterschiedliche Ebenen des Rotationskörpers 2 gelangen kann. Die Öffnungen 5 können ferner als Belüftungsöffnungen genutzt werden. Dazu ist die Abdeckung 10 vorteilhafterweise als Gitter oder ähnliches ausgeführt.

Weiterhin ist gemäß Figur 1 eine Endplatte 15 dargestellt, die sich am oberen Ende des Rotationskörpers 2 befindet. Dabei kann sich die Endplatte beispielsweise in einer Höhe von über 25 Metern befinden.

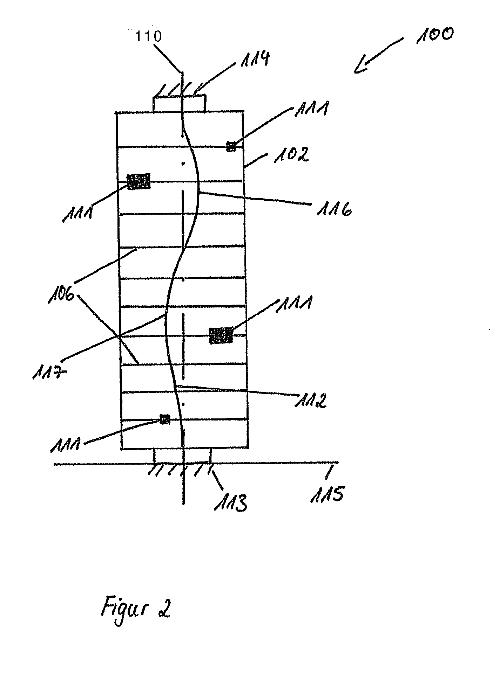

Figur 2 zeigt schematisch einen Magnusrotor 100 umfassend einen zylindrischen Rotationskörper 102, Versteifungsmittel 106, eine obere und eine untere Lagerung 113, 114 sowie eine Drehachse 110. Der Rotationskörper 102 steht senkrecht auf einer Ebene 115, die vorzugsweise Teil eines Schiffes ist, und ist am oberen und am unteren Ende an jeweils einer Lagerung 113, 114 gelagert. Der Rotationskörper 102 kann eine Drehbewegung um die Drehachse 110 ausführen und weist Versteifungsmittel 106 auf, die zur Versteifung des Rotationskörpers 102 dienen und zur Aufnahme von Auswuchtgewichten 111 vorbereitet sein können. An den Versteifungsmitteln 106 gemäß Figur 2 sind insgesamt vier Auswuchtgewichte 111 angebracht. Die Auswuchtgewichte 111 sind in unterschiedlichen Ebenen in unterschiedlichen Umfangspositionen des Rotationskörpers 102 auf den Versteifungsmitteln 106 angebracht. Sie haben eine unterschiedliche Größe und könnten sich beispielsweise zusätzlich hinsichtlich des Gewichtes unterscheiden, um je nach Größe und Lage der ermittelten Unwuchten eingesetzt zu werden. Solche Unwuchten können aufgrund einer unsymmetrischen Massenverteilung am Rotationskörper 102 auftreten. Bei elastischen Rotationskörpern verursachen die Unwuchten Biegeschwingungen mit entsprechenden Biegeeigenformen, die von der Drehzahl des Magnusrotors 100 abhängig sind.

Exemplarisch ist in Figur 2 eine Biegelinie 112 mit zwei Biegeeigenformen 116 und 117 dargestellt, die die Auswirkungen der unwuchtbedingten Schwingungen am Rotationskörper 102 zeigen soll. Zur besseren Anschauung sind die Ausmaße der Schwingungen vergrößert dargestellt. Die Biegelinie 112 fällt nicht mehr mit der Drehachse 110 zusammen. Um diese unwuchtbedingte Durchbiegung zu vermeiden, werden Auswuchtgewichte 111 an den Versteifungsmitteln 106 des Rotationskörpers 102 angebracht, alternativ oder ergänzend können Gewichtskörper entfernt werden.

Insgesamt werden vier Auswuchtgewichte 111 in vier Ebenen senkrecht zur Drehachse 110 des Rotationskörpers 102 gezeigt. Somit wird in dem Beispiel ein Auswuchten des starren Körpers in zwei weiteren Ebenen senkrecht zur Drehachse 110 der Antriebsvorrichtung 100 berücksichtigt. Mit der Starrkörperauswuchtung wird ein ruhiges Laufen der Antriebsvorrichtung 100 auch bei niedrigen Drehzahlen erzielt.

Ohne das Starrkörperauswuchten würde der Rotationskörper 102 lediglich zwei Auswuchtgewichte 111 für zwei Biegeeigenformen benötigen.

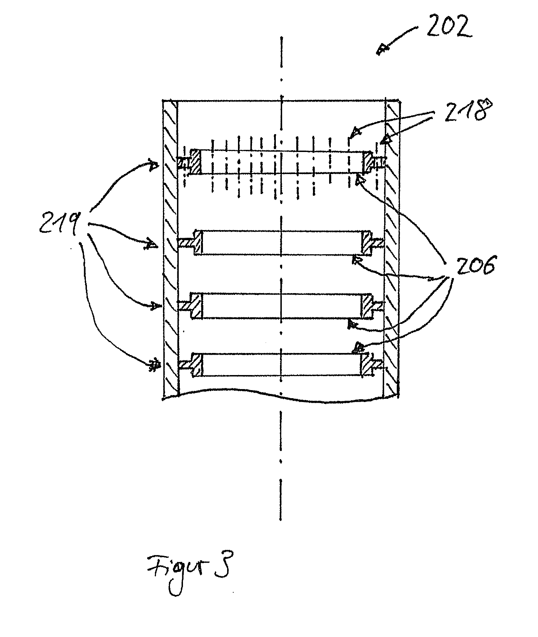

Gemäß Figur 3 ist ein Rotationskörper 202 eines erfindungsgemäßen Magnusrotors von innen heraus dargestellt. Es sind der Rotationskörper 202, Spanten 206 und Löcher 218 in den Spanten 206 zu erkennen. Der Rotationskörper 202 ist in dem Teil des Magnusrotors dargestellt, der oberhalb eines Trägers, auf dem der Rotationskörper 202 gelagert ist, liegt.

Die Spanten 206 sind in axial voneinander beabstandeten Ebenen 219 senkrecht zur Drehachse des Rotationskörpers 202 mit Löchern 218 in unterschiedlichen Umfangspositionen versehen, um an vorbestimmen Stellen Auswuchtgewichte anzubringen. Die Abstände der Löcher sind regelmäßig in Umfangsrichtung zueinander angeordnet und könnten beispielsweise jeweils 10cm groß sein. Die Ebenen 219 können den gleichen oder auch einen unterschiedlichen axialen Abstand zueinander aufweisen.

Die jeweiligen Ebenen 219 der Spanten 206 können zum Anbringen und/oder Entfernen von Auswuchtgewichten z.B. über Leitern erreicht werden.

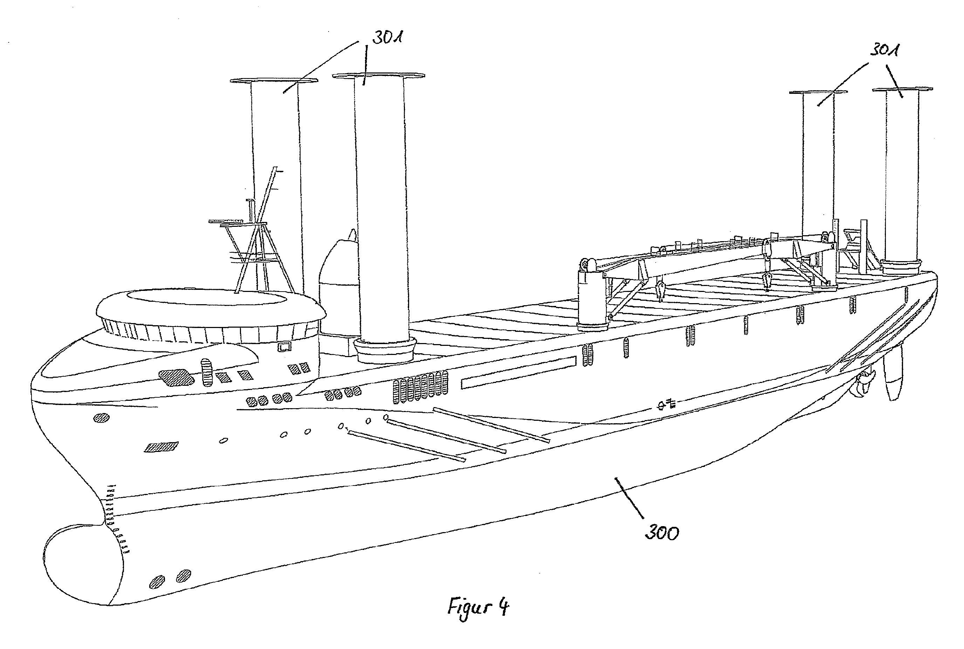

Gemäß Figur 4 ist ein Schiff 300 mit vier Magnusrotoren 301 gezeigt. Dabei stehen die Magnusrotoren 301 senkrecht auf dem Deck 309 des Schiffes 300 und werden als Haupt- oder Hilfsantrieb verwendet.

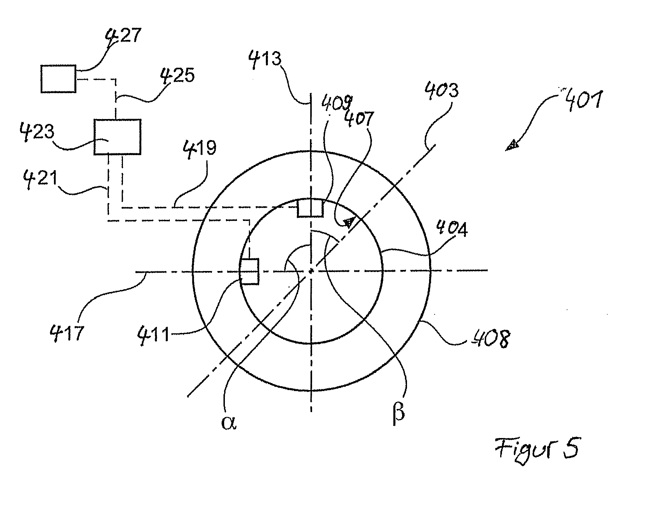

Gemäß Figur 5 weist der Magnusrotor 401 innerhalb des Rotationskörpers 408 den Träger 404 auf. An der Innenfläche 407 des Trägers 404 sind als Teil einer Messeinrichtung ein erster Dehnungssensor 409 und ein zweiter Dehnungssensor 411 angeordnet. Die Messeinrichtung ist dazu ausgebildet, eine Biegebeanspruchung der Rotor-Aufnahme infolge einer im Wesentlichen radialen Kraftbeanspruchung durch Krafteinwirkung auf den Rotationskörper 408 zu bestimmen. Die Messeinrichtung weist die zwei Dehnungssensoren 409, 411 auf, welche im vorliegenden Ausführungsbeispiel in einem Winkel α von 90° zueinander angeordnet sind. Der erste Dehnungssensor 409 liegt vom Mittelpunkt des Trägers 404 aus betrachtet auf einer ersten Achse 413. Die erste Achse 413 verläuft in einem Winkel β zur Längsachse des Schiffs. In einer besonders bevorzugten Ausführungsform ist der Winkel β = 0°. Der zweite Dehnungssensor 411 ist vom Mittelpunkt des Trägers 404 aus betrachtet entlang einer zweiten Achse 417 an der Innenfläche 407 des Trägers 404 angeordnet. In einer besonders bevorzugten Ausführungsform ist der Winkel zwischen der ersten Achse 413 und der zweiten Achse 417 *α* = 90°.

Der erste Dehnungssensor 409 ist mittels einer Signalleitung 419 mit einer Datenverarbeitungsanlage 423 verbunden. Der zweite Dehnungssensor 411 ist mittels einer zweiten Signalleitung 421 mit der Datenverarbeitungsanlage 423 verbunden. Die Datenverarbeitungsanlage 423 ist mittels einer dritten Signalleitung 425 mit einer Anzeigeeinrichtung 427 verbunden. Die Anzeigeeinrichtung 427 ist dazu ausgebildet, Richtung und Betrag der auf den Träger 404 wirkenden Kraft, aufgrund der Unwucht, anzuzeigen.

Die Dehnungssensoren 409, 411 der Messeinrichtung sowie diese selbst können zusätzlich oder alternativ zu der beschriebenen Funktion der Bestimmung der auf den Träger 404 wirkenden Unwuchten auch zur Erfassung einer Vorschubkrafts am Rotationskörper 408 verwendet werden und/oder zu der Bestimmung von anhaftendem Eis mittels meteorologischen Daten dieses festzustellen, den Betrieb des betroffenen Magnusrotors 401 einzustellen und diesen abzutauen.

## Patentansprüche

1. Magnusrotor (1, 100), der einen zylindrischen Rotationskörper (2, 102) aufweist, zum Wandeln der Windkraft in eine Vorschubkraft unter Ausnutzung des Magnuseffektes, umfassend:
- eine Drehachse (110), um die der Rotationskörper (2, 102) dreht,
- einen Träger, (3) auf dem der Rotationskörpers (2, 102) gelagert ist, **dadurch gekennzeichnet, dass**
- der Rotationskörper Mittel zum Versteifen des Rotationskörpers (2, 102) aufweist,
- der Rotationskörper (2, 102) in wenigstens zwei in axialer Richtung voneinander beabstandete Ebenen senkrecht zur Drehachse (110) des Rotationskörpers (2, 102) Aufnahmen aufweist, an die Auswuchtgewichte (111) angebracht sind.

2. Magnusrotor (1, 100) nach Anspruch 1,
**dadurch gekennzeichnet, dass** die Auswuchtgewichte (111) an den Versteifungsmitteln angebracht sind.

3. Magnusrotor (1, 100) nach einem der vorstehenden Ansprüche, **dadurch gekennzeichnet, dass** der Rotationskörper (2, 102) und/oder die Lagervorrichtung (3) von innen begehbar ist.

4. Magnusrotor (1, 100) nach einem der vorstehenden Ansprüche,
**dadurch gekennzeichnet, dass** der Träger (3) zumindest teilweise im Inneren des Rotationskörpers (2, 102) angeordnet ist und Öffnungen (5) aufweist, um Servicepersonal einen Zugriff aus dem Träger (3) heraus auf wenigstens eines der Versteifungsmittel (106) zu ermöglichen.

5. Magnusrotor (1, 100) nach Anspruch 4,
**dadurch gekennzeichnet, dass** die Öffnungen (5) mit Abdeckungen (10) verschlossen werden.

6. Magnusrotor (1, 100) nach einem der vorstehenden Ansprüche,
**dadurch gekennzeichnet, dass** sich die Versteifungsmittel (106) auf der Innenseite des Rotationskörpers (2,102) befinden und in Umfangsrichtung des Rotationskörpers (2, 102) verlaufen und insbesondere als Spanten (6) und/oder umlaufende Stege ausgebildet sind.

7. Magnusrotor (1, 100) nach einem der vorstehenden Ansprüche,
**dadurch gekennzeichnet, dass** die Versteifungsmittel (106) Ausnehmungen, Löcher und/oder Vorsprünge um den gesamten Umfang in regelmäßigem Abstand, z.B. 10cm aufweisen.

8. Magnusrotor (1, 100) nach einem der vorstehenden Ansprüche,
**dadurch gekennzeichnet, dass** ein Antriebsmotor (14) im Innern des Trägers (3) angeordnet ist, wobei der Antriebsmotor (14) den Rotationskörper (2, 102) antreibt.

9. Verfahren zum Auswuchten eines Magnusrotors (1, 100) nach einem der vorstehenden Ansprüche, umfassend die Schritte:
- Drehen des Rotationskörpers (2, 102) mittels eines Antriebsmotors (14) im Innern des Magnusrotors (1, 100),
- Erfassen von Unwuchten eines Rotationskörpers (2, 102) des Magnusrotors (1, 100) in wenigstens zwei axial versetzten senkrecht zur Drehachse (110) des Rotationskörpers (2, 102) angeordneten Ebenen und
- Anbringen entsprechender Auswuchtgewichte (111) an den Versteifungsmitteln (106) in den jeweiligen Ebenen zur Unterdrückung der Unwucht.

10. Verfahren nach Anspruch 9,
**dadurch gekennzeichnet, dass** die Auswuchtgewichte (111) über die Öffnungen (5) eines Trägers (3) an den Versteifungsmitteln (106) angebracht bzw. von den Versteifungsmitteln (106) entfernt werden.

11. Verfahren nach den Ansprüchen 9 oder 10,
**dadurch gekennzeichnet, dass** die Auswuchtgewichte (111) jeweils mittels wenigstens eines Gewindestiftes fixiert werden.

12. Verfahren nach den Ansprüchen 9 bis 11,
**dadurch gekennzeichnet, dass** die Anzahl der in axialer Richtung voneinander beabstandeten Ebenen senkrecht zur Drehachse (110) des Rotationskörpers (2, 102), in denen Auswuchtgewichte (111) angebracht bzw. entfernt werden, abhängig von den einzelnen Biegeeigenformen (116, 117), die bei einer vorbestimmten Drehzahl unterhalb der Betriebsdrehzahl auftreten, festgelegt wird.

13. Verfahren nach Anspruch 12,
**dadurch gekennzeichnet, dass** für n Biegeeigenformen (116, 117) m Auswuchtgewichte (111) in o axial voneinander beabstandeten Ebenen senkrecht zur Drehachse (110) des Rotationskörpers (2, 102) oder m+2 Auswuchtgewichte (111) in o+2 Ebenen senkrecht zur Drehachse (110) des Rotationskörpers (2, 102) angebracht werden.

14. Fahrzeug, insbesondere ein Schiff (300), mit einem Magnusrotor (1, 100, 301) nach einem der Ansprüche 1 bis 8.

## Claims

1. Magnus rotor (1, 100) which has a cylindrical rotation member (2, 102) for converting wind power into a feed force using the Magnus effect, comprising:
- a rotation axis (110) about which the rotation member (2, 102) rotates,
- a carrier (3) on which the rotation member (2, 102) is supported, **characterised in that**
- the rotation member has means for reinforcing the rotation member (2, 102),
- the rotation member (2, 102) has, in at least two planes which are spaced apart from each other in an axial direction perpendicular relative to the rotation axis (110) of the rotation member (2, 102), receiving members to which balancing weights (111) are fitted.

2. Magnus rotor (1, 100) according to claim 1,
**characterised in that** the balancing weights (111) are fitted to the reinforcement means.

3. Magnus rotor (1, 100) according to either of the preceding claims,
**characterised in that** the rotation member (2, 102) and/or the bearing device (3) are accessible from the inner side.

4. Magnus rotor (1, 100) according to any one of the preceding claims,
**characterised in that** the carrier (3) is arranged at least partially inside the rotation member (2, 102) and has openings (5) in order to afford service personnel access from the carrier (3) to at least one of the reinforcement means (106).

5. Magnus rotor (1, 100) according to claim 4,
**characterised in that** the openings (5) are closed with covers (10).

6. Magnus rotor (1, 100) according to any one of the preceding claims,
**characterised in that** the reinforcement means (106) are arranged at the inner side of the rotation member (2, 102) and extend in the peripheral direction of the rotation member (2, 102) and in particular are constructed as frames (6) and/or peripheral webs.

7. Magnus rotor (1, 100) according to any one of the preceding claims,
**characterised in that** the reinforcement means (106) have recesses, holes and/or projections around the entire periphery with regular spacing, for example, 10 cm.

8. Magnus rotor (1, 100) according to any one of the preceding claims, **characterised in that** a drive motor (14) is arranged inside the carrier (3), the drive motor (14) driving the rotation member (2, 102).

9. Method for balancing a Magnus rotor (1, 100) according to any one of the preceding claims comprising the steps of:
- rotating the rotation member (2, 102) by means of a drive motor (14) inside the Magnus rotor (1, 100),
- detecting imbalances of a rotation member (2, 102) of the Magnus rotor (1, 100) in at least two axially offset planes which are arranged perpendicularly to the rotation axis (110) of the rotation member (2, 102), and
- fitting corresponding balancing weights (111) to the reinforcement means (106) in the respective planes in order to eliminate the imbalance.

10. Method according to claim 9,
**characterised in that** the balancing weights (111) are fitted above the openings (5) of a carrier (3) on the reinforcement means (106) or are moved from the reinforcement means (106).

11. Method according to claim 9 or claim 10,
**characterised in that** the balancing weights (111) are each fixed by means of at least one threaded pin.

12. Method according to claims 9 to 11,
**characterised in that** the number of planes spaced apart from each other in an axial direction perpendicular to the rotation axis (110) of the rotation member (2, 102), in which balancing weights (111) are fitted or removed, is determined in accordance with the individual inherent bending shapes (116, 117) which occur at a specific speed below the operating speed.

13. Method according to claim 12,
**characterised in that**, for n inherent bending shapes (116, 117), m balancing weights (111) are fitted in o axially mutually spaced-apart planes perpendicular to the rotation axis (110) of the rotation member (2, 102) or m+2 balancing weights (111) are fitted in o+2 planes perpendicular to the rotation axis (110) of the rotation member (2, 102).

14. Vehicle, in particular a ship (300), having a Magnus rotor (1, 100, 301) according to any one of claims 1 to 8.

## Revendications

1. Rotor à effet Magnus (1, 100), qui présente un corps de rotation (2, 102) cylindrique, servant à convertir la force éolienne en une force de poussée en exploitant l'effet Magnus, comprenant :
- un axe de rotation (110), autour duquel le corps de rotation (2, 102) tourne,
- un support (3), sur lequel est monté le corps de rotation (2, 102),
**caractérisé en ce**
- **que** le corps de rotation présente des moyens servant à rigidifier le corps de rotation (2, 102),
- en ce que le corps de rotation (2, 102) présente, dans au moins deux plans distants l'un de l'autre dans une direction axiale, de manière perpendiculaire par rapport à l'axe de rotation (110) du corps de rotation (2, 102), des logements, au niveau desquels sont installées des masses d'équilibrage (111).

2. Rotor à effet Magnus (1, 100) selon la revendication 1,
**caractérisé en ce que** les masses d'équilibrage (111) sont installées au niveau des moyens de rigidification.

3. Rotor à effet Magnus (1, 100) selon l'une quelconque des revendications précédentes, **caractérisé en ce que** le corps de rotation (2, 102) et/ou le dispositif de palier (3) sont accessibles depuis l'intérieur.

4. Rotor à effet Magnus (1, 100) selon l'une quelconque des revendications précédentes,
**caractérisé en ce**
**que** le support (3) est disposé au moins en partie à l'intérieur du corps de rotation (2, 102) et présente des ouvertures (5) afin de permettre au personnel de maintenance un accès depuis le support (3) à au moins un des moyens de rigidification (106).

5. Rotor à effet Magnus (1, 100) selon la revendication 4,
**caractérisé en ce que** les ouvertures (5) sont obturées par des éléments de recouvrement (10).

6. Rotor à effet Magnus (1, 100) selon l'une quelconque des revendications précédentes,
**caractérisé en ce que** les moyens de rigidification (106) se trouvent sur le côté intérieur du corps de rotation (2, 102) et s'étendent dans le sens périphérique du corps de rotation (2, 102) et sont réalisés en particulier sous la forme d'anneaux de raidissement (6) et/ou d'entretoises périphériques.

7. Rotor à effet Magnus (1, 100) selon l'une quelconque des revendications précédentes,
**caractérisé en ce que** les moyens de rigidification (106) présentent des évidements, des trous et/ou des parties faisant saillie sur toute la périphérie selon un espacement régulier, par exemple un espacement de 10 cm.

8. Rotor à effet Magnus (1, 100) selon l'une quelconque des revendications précédentes,
**caractérisé en ce qu'**un moteur d'entraînement (14) est disposé à l'intérieur du support (3), sachant que le moteur d'entraînement (14) entraîne le corps de rotation (2, 102).

9. Procédé servant à équilibrer un rotor à effet Magnus (1, 100) selon l'une quelconque des revendications précédentes, comprenant les étapes suivantes consistant à :
- faire tourner le corps de rotation (2, 102) au moyen d'un moteur d'entraînement (14) à l'intérieur du rotor à effet Magnus (1, 100) ;
- détecter des balourds d'un corps de rotation (2, 102) du rotor à effet Magnus (1, 100) dans au moins deux plans décalés axialement, disposés de manière perpendiculaire par rapport à l'axe de rotation (110) du corps de rotation (2, 102) et ;
- installer des masses d'équilibrage (111) correspondantes au niveau des moyens de rigidification (106) dans les plans respectifs afin de contrebalancer le balourd.

10. Procédé selon la revendication 9,
**caractérisé en ce que** les masses d'équilibrage (111) sont installées au niveau des moyens de rigidification (106) ou sont retirées des moyens de rigidification (106) par les ouvertures (5) d'un support (3).

11. Procédé selon les revendications 9 ou 10,
**caractérisé en ce que** les masses d'équilibrage (111) sont fixées respectivement au moyen au moins d'une tige filetée.

12. Procédé selon les revendications 9 à 11,
**caractérisé en ce que** le nombre des plans distants les uns des autres dans la direction axiale, de manière perpendiculaire par rapport à l'axe de rotation (110) du corps de rotation (2, 102), dans lesquels des masses d'équilibrage (111) sont installées ou retirées, est arrêté en fonction des diverses formes spécifiques cintrées (116, 117) apparaissant à une vitesse de rotation préalablement définie en dessous de la vitesse de rotation de fonctionnement.

13. Procédé selon la revendication 12,
**caractérisé en ce que** pour n formes spécifiques cintrées (116, 117), m masses d'équilibrage (111) sont installées dans o plans distants les uns des autres axialement, de manière perpendiculaire par rapport à l'axe de rotation (110) du corps de rotation (2, 102), ou m + 2 masses d'équilibrage (111) sont installées dans o + 2 plans de manière perpendiculaire par rapport à l'axe de rotation (110) du corps de rotation (2, 102).

14. Véhicule, en particulier navire (300), comprenant un rotor à effet Magnus (1, 100, 301) selon l'une quelconque des revendications 1 à 8.
